# EUROPEAN PATENT SPECIFICATION

(11) **EP 1 875 741 B1**
(45) Date of publication and mention of the grant of the patent: **25.02.2015**
(21) Application number: 06745972.7
(22) Date of filing: 25.04.2006
(51) Int. Cl.: H04N 9/31, G03B 21/16

(54) **PROJECTOR AND METHOD FOR COOLING THE SAME**
PROJEKTOR UND KÜHLVERFAHREN DAFÜR
PROJECTEUR ET PROCEDE DE REFROIDISSEMENT DE CELUI-CI

(30) Priority: 28.04.2005 JP 2005132909
(43) Date of publication of application: 09.01.2008
(73) Proprietor: CASIO COMPUTER CO., LTD., Shibuya-ku, Tokyo 151-8543 (JP)
(72) Inventor: HORI, Masahiro,, Hamura-shi, Tokyo 2058555 (JP)
(74) Representative: Grünecker, Kinkeldey, Stockmair & Schwanhäusser
(86) International application number: PCT/JP2006/309121
(87) International publication number: WO 2006/118290

(56) References cited:
- US-B1- 6 254 238
- US-B1- 6 350 033
- PATENT ABSTRACTS OF JAPAN vol. 2003, no. 03, 5 May 2003 (2003-05-05) -& JP 2002 328426 A (RANDAKKU:KK), 15 November 2002 (2002-11-15)
- PATENT ABSTRACTS OF JAPAN vol. 2003, no. 12, 5 December 2003 (2003-12-05) -& JP 2004 219752 A (TAMRON CO LTD), 5 August 2004 (2004-08-05)
- PATENT ABSTRACTS OF JAPAN vol. 2002, no. 12, 12 December 2002 (2002-12-12) -& JP 2002 244215 A (SHARP CORP), 30 August 2002 (2002-08-30)

## Description

### BACKGROUND OF THE INVENTION

### Field of the Invention

The present invention relates to a projector for projecting images based on video signals.

### Description of the Related Art

In these days, many projectors are used which project on to a screen images that are displayed on a screen of a personal computer and video signal images, and furthermore, images by image data stored on a memory card.

In many cases, this type of projector is constructed such that a small, high-luminance light source such as a metal halide lamp or an extra-high voltage mercury lamp is used, light emitted from the light source is split into light beams of three primary colors by a color filter so as to be shone to image forming devices referred to as.liquid crystal or digital micromirror devices (DMDs) by a light source side optical system, and transmitted light from the liquid crystal type image forming device or reflected light from the DMD type imaging forming devices is then projected on to the screen via a group of lens elements referred to as a projection side optical system having a zooming function.

In addition, in this type of projector, since the light source generates a large amount of heat or has a high calorific power, and furthermore, the light source side optical system, a power supply circuit, the image forming devices and the like which all constitute heat sources are incorporated therein, a cooling mechanism including a cooling fan is incorporated in the projector so as to cool the light source device, the power supply circuit and the like which constitute the heat sources.

As such a cooling mechanism, there is proposed a cooling system in which not only a light source which is particularly heated to a high temperature while generating a large amount of heat is separated from the other heat sources as an independent section, but also the optical system, the power supply unit and the like are separated from each other as independent sections so that each section is cooled independently (for example, refer to Japanese Unexamined Patent Publication No. 2004-054055).

JP 2002 328 426 A relates to the cooling of a projector, wherein a condensing system is cooled by the air sucked in, whereas the light source is cooled by the air blown out.

JP 2004 219 752 A relates to the cooling of a video projection device using a sirocco fan cooling the electronic components of power source devices by air sucked in from the outside at two sides of the projector and guided to the suck-in port of the fan by a cooling passage. The reflector of the light source is cooled by the air exhausted from the fan.

JP 2002 244 215 A describes cooling of a projector light source. In order to lower the temperature of the air blown out from the light source after cooling it, a cylindrical member is provided to guide the air from the air discharge fan to the outside.

US 6 350 033 B1 relates to a cooling of the optical path devices, which are enclosed in a box. The optical path devices are cooled by the air circulating into the enclosing box through a pipe attached thereto. Providing the pipe prevents dust or oil mist from entering the optical path devices enclosed in the box.

### SUMMARY OF THE INVENTION

In the conventional projectors, however, since in addition to the light source lamp which is heated to a high temperature and has the high calorific power, the other heat sources such as the power supply circuit, light source side optical system, DMDs which function as the image forming devices and the like are incorporated therein, a plurality of cooling fans are provided to cool the light source lamp and the other heat sources, and hence, there are caused disadvantages that the projectors are difficult to be reduced in size and that fan noise is generated.

The present invention was made to eliminate these disadvantages.

This is achieved by the features of the independent claims.

According to the present invention, the reduction in size of the projector and/or a better cooling of the projector can be realized.

### BRIEF DESCRIPTION OF THE DRAWINGS

Fig. 1 is a drawing which shows an external appearance of a projector according to the invention.
Fig. 2 is a circuit diagram which exemplarily shows control blocks of the projector according to the invention.
Fig. 3 is a drawing which exemplarily shows a state in which a top plate of the projector according to the invention is removed.
Fig. 4 is a drawing which exemplarily shows a state in which a house cover of a lamp house and part of bulkheads of the projector according to the invention are removed.
Fig. 5 is a drawing which exemplarily shows a state in which the projector according to the invention is viewed from the rear thereof with the top plate thereof removed.
Fig. 6 is a drawing which exemplarily shows a state resulting when the projector according to the invention is cut horizontally at a height which corresponds to one half the height of the projector.
Fig. 7 is a partially cutaway drawing which shows exemplarily a main part of the projector according to the invention.

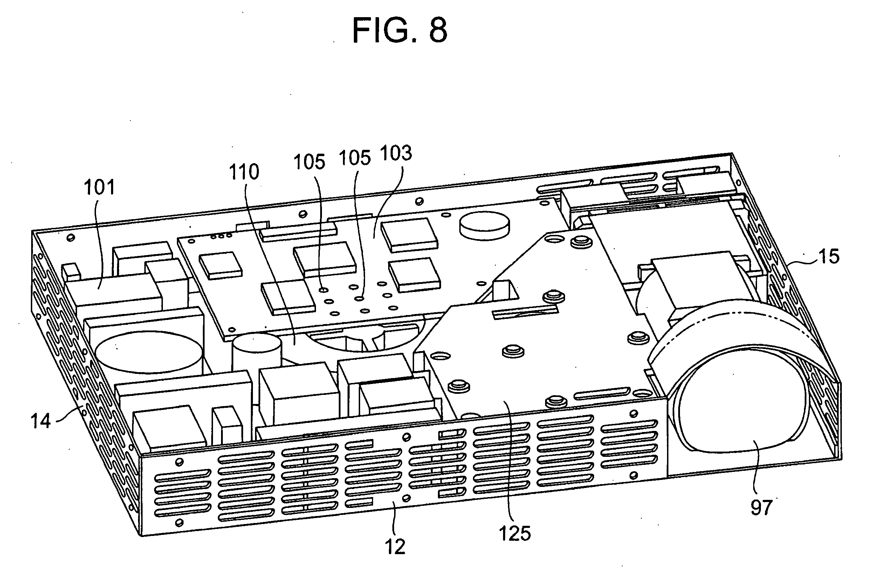

Fig. 8 is a drawing which exemplarily shows a state in which a top plate of a projector according to another embodiment of the invention is removed.

### DETAILED DESCRIPTION OF THE PREFERRED EMBODIMENT

In a projector 10 according to the invention, a projection side optical system is disposed along a side plate of a main body case, an image forming device 51 is disposed near a back plate 13 in such a manner as to be aligned with an optical axis of the projection side optical system, and a space is provided between an image forming device mounting plate 55 and the back plate 13 so as to form an air flow path, so that a radiator plate 53 of the image forming device 51 is disposed in the air flow path so formed. In addition, a light source device 61 is positioned inside of the projection side optical system, and bulkheads 121, 122 which are made from a heat insulating material are provided further inside than the light source device 61. Furthermore, a cooling fan is disposed at substantially at the center of the projector 10, and an air discharge port 113 of the cooling fan is positioned in the vicinity of the light source device 61, so that exhaust air from the cooling fan is designed to be blown against the light source device 61 from between the bulkheads 121, 122 which are made from the heat insulating material. Then, the air blown against the light source device 61 is exhausted to the outside of the projector 10 from a front plate 12 of the main body case.

Furthermore, a control circuit board 103, which functions as a main circuit board for the projector 10, is disposed in the vicinity of the cooling fan so that outside air drawn into the cooling fan is further drawn along the control circuit board 103. In addition, a power supply control circuit 41 is provided immediately close to the main body case or on the main circuit board, and part of members that make up a light source side optical system are accommodated in a case 131 made of a material which conducts heat well and are fixed to the main body case such as a bottom plate 16.

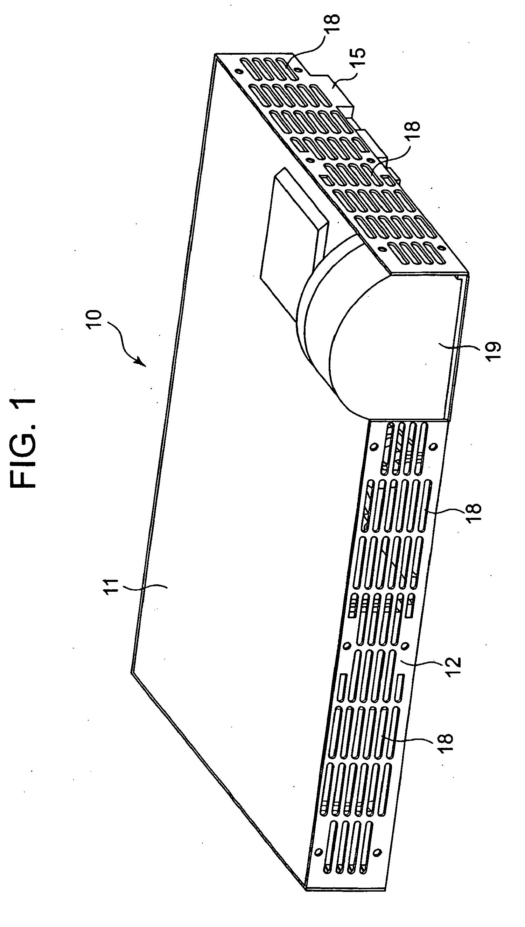

The projector according to the embodiment of the invention is, as shown in Fig. 1, formed into a substantially rectangular parallelepiped shape, and a lens cover 19 which covers a projection opening or lens is provided sideways of the front plate 12 which makes up the main body case. In addition, a plurality of vent holes 18 are provided in the front plate 12.

In addition, although omitted in Fig. 1, the projector 10 is such that a key/indicator unit is provided on an top plate 11 of the main body case, and provided on this key/indicator unit are keys and indicators including a power ON/OFF switch, a power indicator which indicates that the power supply is on or off, a lamp switch key which illuminates a lamp of the light source device, a lamp indicator which indicates that the lamp is illuminated and an overheat indicator which raises an alarm when the light source device or the like is overheated.

Furthermore, provided on a back side of the main body case, which is not shown, are an input/output connector unit where USB terminals, image signal input D-SUB terminals, S terminals, RCA terminals are provided in the back plate and an Ir receiving unit.

Note that a plurality of vent holes 18 are provided on each of a right side plate of the main body case, which is not shown, and a left side plate 15 which is a side plate shown in Fig. 1.

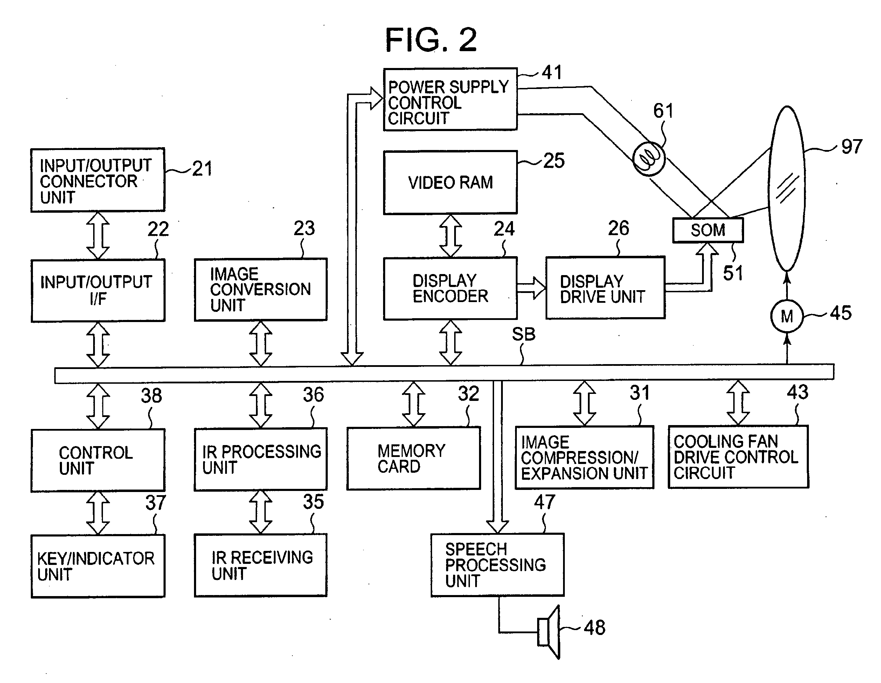

In addition, as shown in Fig. 2, a control circuit of the projector 10 is such as to have a control unit 38, an input/output interface 22, an image conversion unit 23, a display encoder 24, a display drive unit 26 and the like. Image signals of various standards that are inputted from the input/output connector unit 21 are sent to the image conversion unit 23 via the input/output interface 22 and a system bus (SB) where the image signals so sent are converted and united into image signals of a predetermined format which is suitable for display, and thereafter, are sent to the display encoder 24.

In addition, the display encoder 24 deploys and stores the image signals so sent thereto on a video RAM, generates video signals from the contents of what is stored in the video RAM and outputs the video signals so generated to the display drive unit 26.

Then, the display drive unit 26 to which video signals are inputted from the display encoder 24 drives the image forming device 51 which is a spatial optical modulator (SOM) at an appropriate frame rate according to image signals sent therefrom. In addition, in this projector 10, by allowing light from the light source device 61 to be incident on the image forming device 51 via the light source side optical system, an optical image is formed by reflected light from the image forming device 51, and the image of the optical image is projected to be displayed on a screen, not shown, via a projection side group of lens elements which makes up the projection side optical system. Additionally, a group of movable lens elements 97 of the projection side group of lens elements is driven by a lens motor 45 for zooming adjustment and focus adjustment.

Furthermore, an image compression/expansion unit 31 performs a recording processing in which luminance signals and color-difference signals of image signals are data compressed by ADTC and Huffman coding processing so as to be written sequentially on a memory card 32 which is a detachable recoding medium and at a reproducing mode, reads out the image data recorded on the memory card 32, expands individual image data which make up a series of moving pictures frame by frame and sends the image data so expanded to the display encoder 24 via the image conversion unit 23, whereby moving pictures or the like can be displayed based on the image data stored on the memory card 32.

The control unit 38 governs the operation control of each circuit within the projector 10 and is made up of a CPU, a ROM which fixedly stores operation programs for various types of settings and a RAM which is used as a work memory.

In addition, an operation signal of the key/indicator unit 37 which is provided on the top plate 11 of the main body case and is made up of main keys and indicators is sent directly to the control unit 38, while a key operation signal from a remote controller is received by the Ir receiving unit 35 and is demodulated into a code signal by an Ir processing unit 36, and this mode signal is sent to the control unit 38.

Note that the control unit 38 is connected to a speech processing unit 47 via a system bus (SB), and the speech processing unit 47 includes a sound source circuit for a PCM sound source, converts voice data into analog data at the time of projecting mode and reproducing mode and drives a speaker 48 to radiate sound loudly.

In addition, this control unit 38 controls a power supply control circuit 41 in such a manner that when a lamp switch key is operated, the lamp of the light source device 61 is turned on by the power supply control circuit 41. Furthermore, the control unit 38 causes a cooling fan drive control circuit 43 to perform a temperature detection by a temperature sensor provided on the light source device 61, so as to control the rotational speed of the cooling fan.

In addition, these RAM, ROM, IC and other circuit devices are mounted on the control circuit board 103 which functions as a main control circuit board, and the power supply control circuit 41, which is part of a power system, is incorporated in a lamp power supply circuit board 101, whereby the control circuit board 103, which is the main control circuit board of a control system, and the lamp power supply circuit board 101 of the power system are formed separately from each other.

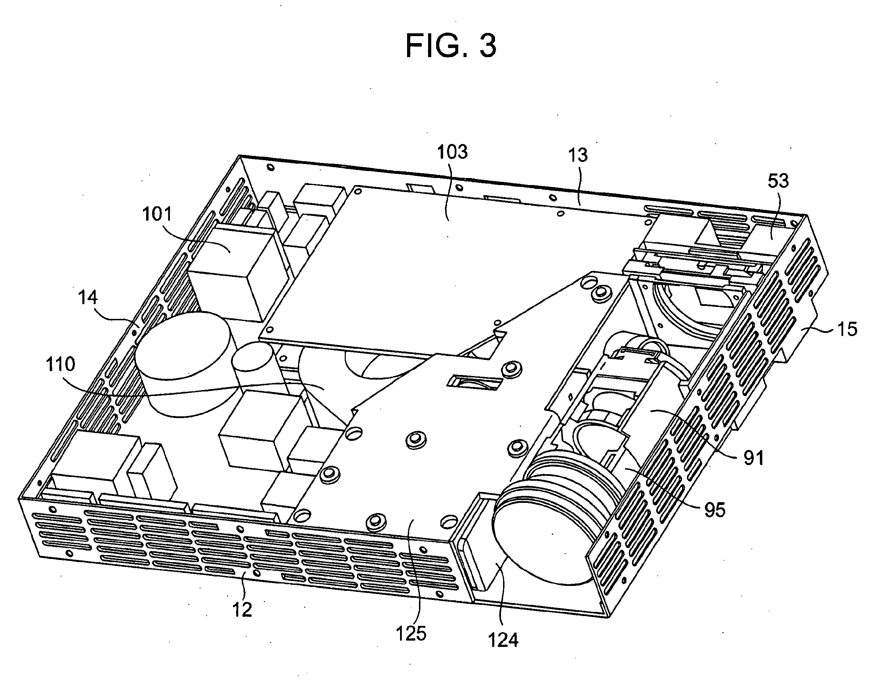

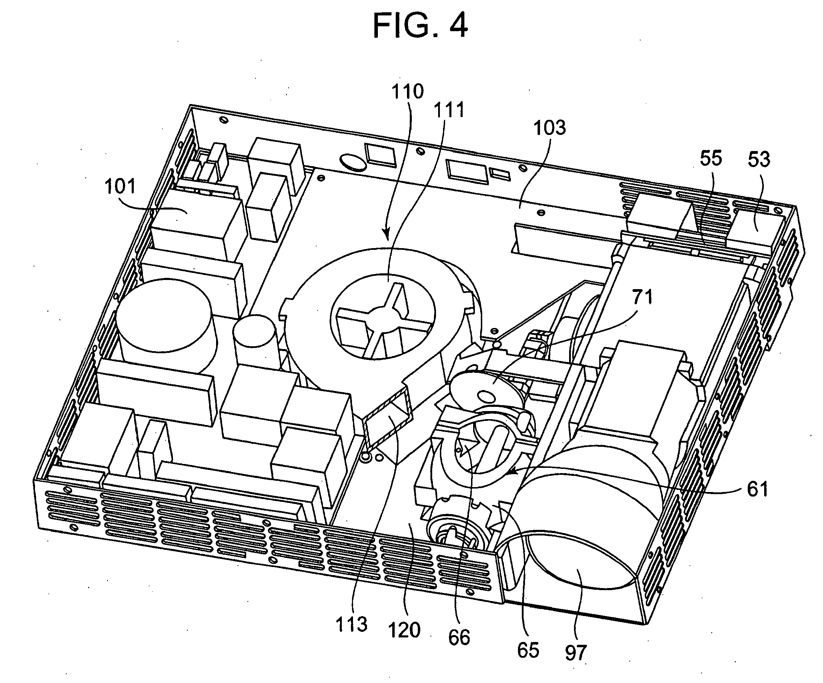

Additionally, in an internal construction of the projector 10, as shown in Figs. 3 and 4, the lamp power supply circuit board 101 which incorporates therein the power supply control circuit 41 is disposed in the vicinity of a right side plate 14, and a sirocco fan type blower 110 is disposed at substantially the center of the bottom plate 16 as a cooling fan. In addition, a discharge port 113 of the blower 110, which is made to function as a cooling fan, is fixed to be directed towards the light source device 61 which incorporates therein a light source lamp, and the projection side optical system is disposed along the left side plate 15, the light source device 61 and the light source side optical system are disposed inside of the projection side optical system.

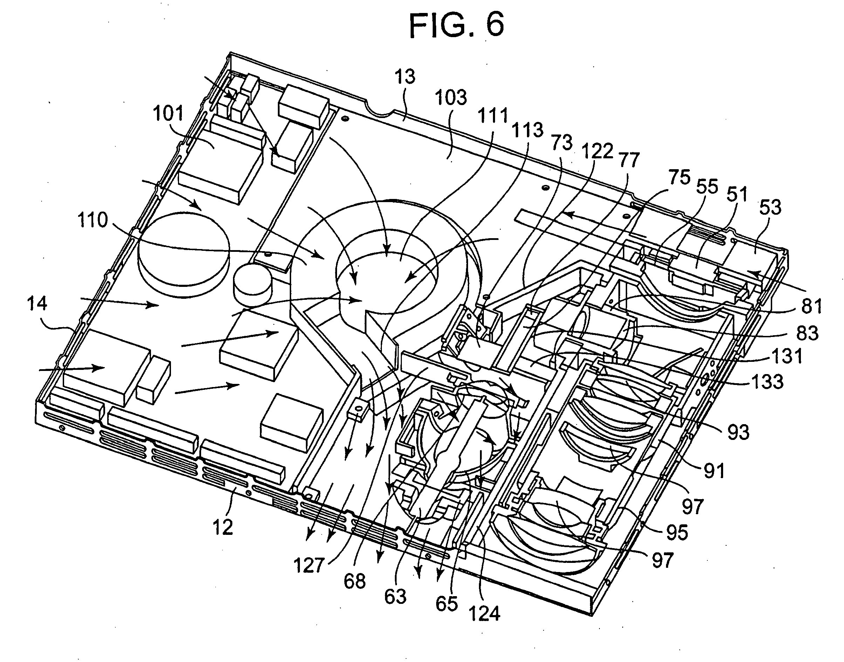

As shown in Fig. 6, the optical system of the projector 10 is made up of the light source device 61 in which a discharge lamp 63 is provided in an interior of a reflector 65 which is covered on a front side thereof by an explosion-proof glass 68 as an extra-high voltage mercury lamp, the light source side optical system which shines light emitted from the light source device 61 on to digital micromirror devices (DMDs) which make up the image forming device 51, the imaging forming device 51 and the group of lens elements of the projection side optical system which shine light reflected by the image forming device 51 so as to form an image on to the screen.

In addition, the light source side optical system is made up of a color wheel 71 which has on the periphery thereof a color filter which splits light emitted from the light source device 61 into shafts of red, green and blue light and which is driven by a wheel motor 73, a light guiding rod 75 which converts transmitted light beams from the filter of the color wheel 71 into light beans each having a uniform intensity distribution, a prism 77 which changes the direction of light beams emitted from the light guiding rod 75 at 90 degrees, a light source side group of lens elements 83 which is made up of a plurality of lens elements for converging the light beams that have transmitted through the prism 77 on to the image forming device 51 as a combined light and a mirror 85 which shines the light that has transmitted through the group of lens elements 83 on to the image forming device 51 at a predetermined angle.

Note that there may occur a case where not an optical prism but a mirror is used for the prism 77 that is to be combined with the light guiding rod 75.

Furthermore, the projection side optical system is made up of a variable-focus lens which is made up, in turn, of a group of fixed lens elements 93 incorporated within a fixed lens barrel 91 and the group of movable lens elements 97 incorporated within a movable lens barrel 95, and the group of movable lens elements 97 is moved by the lens motor 45 so as to enable zooming adjustment and focus adjustment.

In addition, vent holes 18 are provided in the back plate 13 at a portion thereof which corresponds to a rear portion of the image forming device 51, and an air flow path is formed by the back plate 13 and the image forming device mounting plate 55 so that outside air drawn thereinto from the vent holes 18 provided in the back plate 13 and the vent holes 18 provided at the rear of the left side plate 15 is made to flow in a direction of the blower 110.

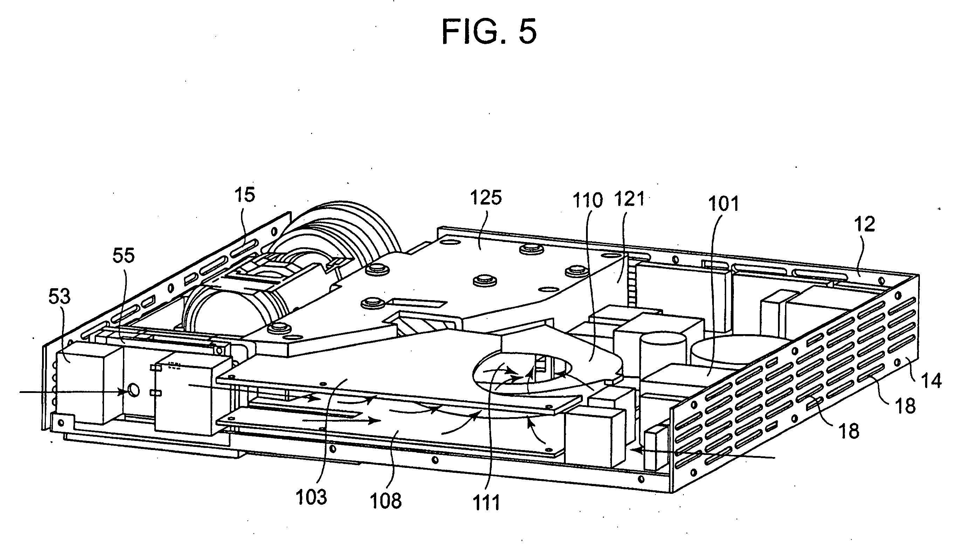

As shown in Figs. 4 and 5, the image forming device radiator plate 53 is disposed behind the image forming device mounting plate 55, and as shown in Fig. 5, the control circuit board 103 is made to be made up of two control circuit boards, and air flowing between the two control circuit boards 103 and along above and below the two control circuit boards 103 is designed to be drawn into a suction port 111 of the blower 110.

Furthermore, the light source side optical system and the light source device 61 are accommodated in a lamp house 120, and this lamp house 120 is, as shown in Fig. 6, surrounded around the perimeter thereof by the first bulkhead 121 which extends from the discharge port 113 of the blower 110 to the front plate 112, the second bulkhead 122 which extends from the vicinity of the image forming device mounting plate 55 to the discharge port 113 of the blower 110, a third bulkhead 123 which extends through a lens barrel 81 for the light source side group of lens elements 83 so as to support the lens barrel 81 and a fourth bulkhead 124 which continues from the third bulkhead 123 to reach the front plate 12 in such a manner as to separate the projection side optical system from the light source device 61, and is covered at the top thereof by a house cover 125, as shown in Fig. 3.

Note that a sheet material having the heat insulating properties is used for the first bulkhead 121 and the second bulkhead 122, and the third bulkhead 123 and the house cover 125, whereas a material which conducts heat well such as sheet aluminum is used for the fourth bulkhead 124.

In addition, the discharge port 113 of the blower 110 is positioned in the vicinity of the light source device 61 while being directed towards a gap provided between the first bulkhead 121 and the second bulkhead 122.

Additionally, a straightening plate 127 is disposed near the color wheel 71 in parallel therewith in the interior of the lamp house 120 for causing part of air drawn into the lamp house 120 from the discharge port 113 of the blower 110 to flow along a surface of the color wheel 71.

In addition, the light guiding rod 75 and the prism 77 are accommodated in a metallic case 131 which is made of a material which conducts heat well and are fixed to the bottom plate 16, and the metallic case 131 and the fourth bulkhead 124 are connected to each other by means of a metallic rod 133.

Consequently, when a fan of the blower 110 is rotated, the blower 110, which is made to be a cooling fan, draws air on the periphery thereof and thus draws outside air into the interior of the projector 10 from many of the vent holes 18 provided in the main body case of the projector 10 by drawing air residing on the periphery of the blower 110 in the projector 10.

Outside air drawn in from the vent holes 18 in the rear of the left side plate 15 and the vent holes 18 in the back plate 13 flows through the air flow path between the back plate 13 and the image forming device mounting plate 55 so as to cool the image forming device radiator plate 53 and further passes above an upper side of the upper control circuit board 103 and below a lower side of the lower control circuit board 103 and through a space between these control circuit boards 103 so as to be drawn into the suction port 111 of the blower 110.

In addition, part of outside air drawn into the interior of the projector 10 from the vent holes 18 in the right side plate 14 also passes by the perimeter of the lamp power supply circuit board 101 to reach the control circuit board 103 and further flows along the control circuit board 103 so as to be drawn in from the suction port 111 of the blower 110.

Note that the power supply control circuit 41 is not only incorporated on the lamp power supply circuit board 101 which is separated from the control system but also may be incorporated in the control circuit board 103, which is the main circuit board.

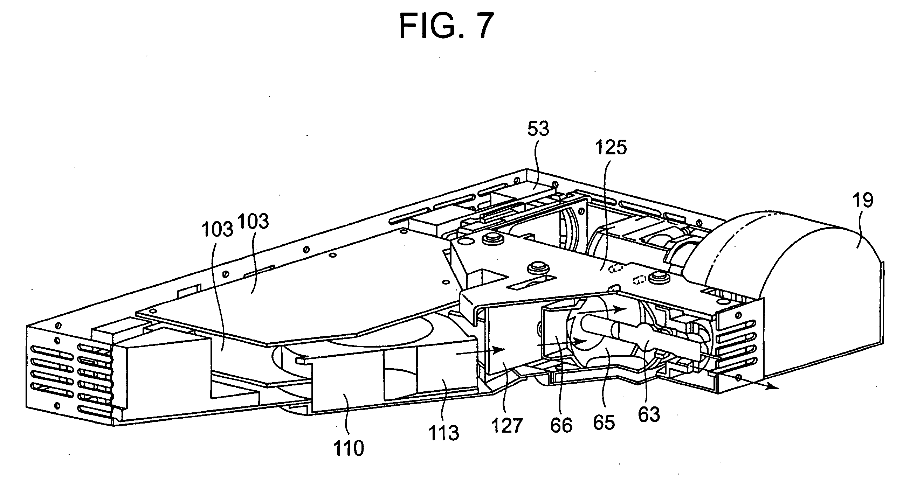

Part of an exhaust air flow blown into the lamp house 120 is caused to flow along the color wheel 71 by the straightening plate 127, whereas most of the exhaust air flow flows along the perimeter of the light source device 61, and as shown in Figs. 6 and 7, part of the air that flows along the perimeter of the light source device 61 flows in such a manner as to pass through the interior of a reflector 65 from an opening provided in the reflector 65 while cooling the light source device 61 and the color wheel 71 and is exhausted to the outside of the projector 10 from the vent holes 18 in the front plate 12.

Thus, since the light source device 61, which is heated to the highest temperature in the interior of the projector 10 and which generates a large amount of heat, is disposed near the discharge port 113 of the blower 110, which functions as the cooling fan, a large amount of air can be blown against the light source device 61, thereby making it possible to cool the light source device 61 and the color wheel 71 disposed immediately near to the light source device 61 in an effective fashion.

In addition, since the light source device 61 is provided in the interior of the lamp house 120 surrounded by the first bulkhead 121 and the second bulkhead 122, the third bulkhead 123, and the fourth bulkhead 124 and the house cover 125, air blown into the lamp house 120 is exhaust from the vent holes 18 in the front plate 12 directly to the outside of the projector 10, and the first bulkhead 121 and the second bulkhead 122, and the house cover 125 are made of the sheet material having the heat insulating properties, exhaust heat from the light source device 61 is transmitted to the other spaces of the interior of the projector 10 in no case, thereby making it possible to cool the projector 10 effectively.

In addition, heat from the light guiding rod 75 and the prism 77 which are provided in the interior of the lamp house 120 is dissipated not only via the metallic case 131 and the metallic rod 133 but also by a large amount of air flowing within the lamp house 120, whereby the light guiding rod 75 and the prism 77 can be cooled.

Additionally, the image forming device radiator plate 53 and the lamp power supply circuit board 101 are cooled by fresh outside air drawn into the projector 10 from the outside thereof, while the control circuit boards 103 are cooled by a large amount of air drawn into the blower 110, and therefore, the heat sources in the projector 10 can be cooled efficiently by the single cooling fan, thereby making it possible to reduce the projector 10 in size.

Since the blower 110, which is made to function as the cooling fan, is disposed in the vicinity of the center of the projector 10, the rotational noise of the fan is made difficult to leak out, and hence, the fan noise can be reduced.

In addition, as to the cooling of the image forming device radiator plate 53, the efficiency at which the image forming device radiator plate 53 can be adjusted by the position, number and size of the vent holes 18 provided in the back plate 13 of the projector 10, as well as the space between the image forming device mounting plate 55 and the back plate 13.

The cooling of the lamp power supply circuit board 101 can also be adjusted by the position, number and size of the vent holes 18 provided in the right side plate 14 of the projector 10, as well as the distance between the lamp power supply circuit board 101 and the right side plate 14.

In addition, the efficiency at which the control circuit board 103, which functions as the main circuit board, is cooled can be adjusted by adjusting the setting of flow rate and speed of air by the distance with the suction port 111 of the blower 110, the number of control circuit boards 103 and the distance between the individual control circuit boards 103.

Furthermore, of the plurality of control circuit boards 103 which are stacked on each other at an interval, the control circuit board 103 which is disposed at the top is made larger than the other control circuit board 103, so that part of an upper part of the blower 110, which is made to function as the cooling fan, may be covered by the control circuit board 103 disposed at the top.

As this occurs, a plurality of vent holes 105 are provided in the control circuit board 103 of the plurality of control circuit boards 103 which is disposed at the top in such a manner as to coincide in position with the suction port 111 of the blower 110.

Thus, by making larger the control circuit board 103 of the plurality of control circuit boards 103 which is disposed at the top than the other, since the mounting of many of the control circuit devices is facilitated and the vent holes 105 are provided in such a manner as to coincide in position with the suction port 111 of the blower 110, air residing within the projector 10 can be drawn into the blower 110 from the vent holes 105, whereby air residing a space between the control circuit board 103 disposed at the top and the top plate 11 of the main body case is drawn in so as to cause air staying on an upper surface of the control circuit board 103 disposed at the top to flow.

Consequently, the speed and flow rate of the cooling air flowing along the upper surface and lower surface of each of the control circuit boards 103 are controlled by adjusting the number, size and position of the vent holes 105 and furthermore, adjusting the space between the control circuit board 103 which covers above the blower 110 and an upper surface of the blower 110, thereby making it possible to adjust and set the degree of cooling of the plurality of circuit devices which constitute the heat sources.

Note that the cooling fan is not limited to the sirocco fan-type blower 110.

In addition, note that the present invention is not limited to the embodiment that has been described heretofore but can be modified and improved freely without departing from the scope of the invention.

## Claims

1. A projector comprising:
a main body case
a cooling fan (110);
a control circuit board (103);
a light source device (61) disposed in the vicinity of an air discharge port (113) of the cooling fan (110), and
a plurality of heat sources (101, 51),
**characterized in that**
the control circuit board (103) is disposed in the vicinity of a suction port (111) of the cooling fan perpendicularly to a suction air flow direction,
the cooling fan (110) is disposed in the vicinity of the center of the projector,
the projector is adapted to draw air from a plurality of directions, excluding a direction of the light source device (61), within the main body case of the projector which surround the cooling fan (110) along the control circuit board (103) into the air suction port (111) to thereby cool the control circuit board and the plurality of heat sources (101, 51) other than the light source device which surround the cooling fan, and
to blow air discharged from the air discharge port (113) against the light source device (61) and to discharge the air blown against the light source device (61) to an exterior of the main body case of the projector.

2. A projector as set forth in claim 1, wherein the vent (18) for exhausting air is provided in one side of a housing of the projector.

3. A projector as set forth in claim 1 or 2, comprising a vent provided in a housing of the projector for drawing outside air thereinto.

4. A projector as set forth in claim 3, wherein the vent for drawing outside air is provided in a plurality of sides (14, 15) of the housing of the projector.

5. A projector as set forth in claim 3, wherein the vent for drawing outside air and the vent for exhausting air are provided in the sides of the housing of the projector which are different from each other.

6. A projector as set forth in any of claims 1 to 5, the heat source other
than the light source includes an image forming device (51) which forms an image to be projected.

7. A projector as set forth in any of claims 1 to 6, wherein the heat 5 source other than the light source includes a power supply device (101) for the light source.

8. A projector as set forth in any of claims 1 to 7, wherein the heat source other than the light source includes a control circuit board (103) of the projector.

9. A projector as set forth in any of claims 1 to 8, wherein the cooling fan (110) is disposed substantially at the center of a housing of the projector.

10. A projector as set forth in any of claims 1 to 9, comprising further a bulkhead (121) which separates in space the light source and the heat source other than the light source.

11. A projector as set forth in any of claims 1 to 10, comprising further a projection lens and a bulkhead (124) which separates spatially the light source from the projection lens.

12. A projector as set forth in any of claims 1 to 11, wherein a suction port (111) and the discharge port (113) of the cooling fan (110) are provided in such a manner as to intersect each other at right angles.

13. A projector as set forth in any of claims 1 to 12, wherein a main circuit board (103) which incorporates a control circuit of the projector is made up of a plurality of circuit boards, the plurality of circuit boards being stacked on each other at an interval and disposed in the vicinity of an suction port (111) of the cooling fan (110).

14. A projector as set forth in any of claims 1 to 13, wherein an image forming device (51) is disposed in the vicinity of a main body case inside of the projector, wherein an air flow path is formed by a space between an image forming device mounting plate and the main body case, and wherein a radiator plate (53) of the image forming device (51) is disposed in the air flow path so formed.

15. A projector as set forth in any of claims 1 to 14, wherein a lamp house is provided in an interior of the projector, wherein the light source device (61) is accommodated in the lamp house, wherein exhaust air from the cooling fan is blown into the lamp house, while air residing in the lamp house is discharged directly outside of the projector.

16. A projector as set forth in any of claims 1 to 15, wherein part of wall surfaces of the lamp house is formed by a bulkhead (121, 122) made from a heat insulating material.

17. A projector as set forth in any of claims 1 to 17, a light source side optical system such as a light guiding rod (75), a prism or a mirror is fixed by a material which conducts heat well.

18. A projector as set forth in any of claims 1 to 18, wherein a vent is provided in part of the main circuit board which is disposed in the vicinity of the suction port (111) of the cooling fan (110).

19. A method for cooling a projector comprising:
a main body case,
a cooling fan (110) disposed in the vicinity of the center of the projector,
a control circuit board (103) disposed normal to a suction air flow direction in the vicinity of an air suction port (111) of the cooling fan, and
a light source device (61) disposed in the vicinity of an air discharge port (113) of the cooling fan (110), and
a plurality of heat sources (101,51)
**characterized in that**
air from a plurality of directions, excluding a direction of the light source device (61), within the main body case of the projector which surround the cooling fan (110) is drawn along the control circuit board (103) into the air suction port (111) to thereby cool the control circuit board and the plurality of heat sources (101, 51) other than the light source device which surround the cooling fan, and
air discharged from the air discharge port (113) is blown against the light source device (61) and the air blown against the light source device (61) is then discharged to an exterior of the main body case of the projector.

## Patentansprüche

1. Projektor, umfassend:
einen Hauptkörperkasten;
ein Kühlgebläse (110);
eine Steuerleiterplatte (103);
eine Lichtquellenvorrichtung (61), die nahe einer Luftabgabeöffnung (113) des Kühlgebläses (110) angeordnet ist; und
eine Mehrzahl von Wärmequellen (101, 51),
**dadurch gekennzeichnet, dass**
die Steuerleiterplatte (103) nahe einer Ansaugöffnung (111) des Kühlgebläses senkrecht zu einer Ansaugluftströmungsrichtung angeordnet ist,
das Kühlgebläse (110) nahe der Mitte des Projektors angeordnet ist,
wobei der Projektor ausgelegt ist
zum Ziehen von Luft aus einer Mehrzahl von Richtungen mit Ausnahme einer Richtung der Lichtquellenvorrichtung (61) innerhalb des Hauptkörperkastens des Projektors in der Umgebung des Kühlgebläses (110) entlang der Steuerleiterplatte (103) in die Luftansaugöffnung (111), um hierdurch die Steuerleiterplatte und die Mehrzahl von Wärmequellen (101, 51), die nicht die Lichtquellenvorrichtung sind, in der Umgebung des Kühlgebläses zu kühlen, und
zum Blasen von von der Luftabgabeöffnung (113) abgegebener Luft gegen die Lichtquellenvorrichtung (61) und zum Abgeben der gegen die Lichtquellenvorrichtung (61) geblasenen Luft an ein Äußeres des Hauptkörperkastens des Projektors.

2. Projektor nach Anspruch 1, wobei die Lüftung (18) zum Auslassen von Luft in einer Seite eines Gehäuses des Projektors vorgesehen ist.

3. Projektor nach Anspruch 1 oder 2, umfassend eine Lüftung, die in einem Gehäuse des Projektors zum Einziehen von Außenluft vorgesehen ist.

4. Projektor nach Anspruch 3, wobei die Lüftung zum Ziehen von Außenluft in einer Mehrzahl von Seiten (14, 15) des Gehäuses des Projektors vorgesehen ist.

5. Projektor nach Anspruch 3, wobei die Lüftung zum Ziehen von Außenluft und die Lüftung zum Auslassen von Luft in den voneinander verschiedenen Seiten des Gehäuses des Projektors vorgesehen sind.

6. Projektor nach einem der Ansprüche 1 bis 5, wobei die Wärmequelle, die nicht die Lichtquelle ist, eine Bilderzeugungsvorrichtung (51) beinhaltet, die ein zu projizierendes Bild erzeugt.

7. Projektor nach einem der Ansprüche 1 bis 6, wobei die Wärmequelle, die nicht die Lichtquelle ist, eine Leistungsversorgungsvorrichtung (101) für die Lichtquelle beinhaltet.

8. Projektor nach einem der Ansprüche 1 bis 7, wobei die Wärmequelle, die nicht die Lichtquelle ist, eine Steuerleiterplatte (103) des Projektors beinhaltet.

9. Projektor nach einem der Ansprüche 1 bis 8, wobei das Kühlgebläse (110) im Wesentlichen in der Mitte eines Gehäuses des Projektors angeordnet ist.

10. Projektor nach einem der Ansprüche 1 bis 9, des Weiteren umfassend eine Trennwand (121), die die Lichtquelle und die Wärmequelle, die nicht die Lichtquelle ist, räumlich trennt.

11. Projektor nach einem der Ansprüche 1 bis 10, des Weiteren umfassend eine Projektionslinse und eine Trennwand (124), die die Lichtquelle von der Projektionslinse räumlich trennt.

12. Projektor nach einem der Ansprüche 1 bis 11, wobei eine Ansaugöffnung (111) und die Abgabeöffnung (113) des Kühlgebläses (110) derart vorgesehen sind, dass sie einander unter rechten Winkeln schneiden.

13. Projektor nach einem der Ansprüche 1 bis 12, wobei eine Hauptleiterplatte (103), die eine Steuerschaltung des Projektors beinhaltet, aus einer Mehrzahl von Leiterplatten besteht, wobei die Mehrzahl von Leiterplatten aufeinander in einem Abstand gestapelt und nahe einer Ansaugöffnung (111) des Kühlgebläses (110) angeordnet ist.

14. Projektor nach einem der Ansprüche 1 bis 13, wobei eine Bilderzeugungsvorrichtung (51) nahe einem Hauptkörperkasten innerhalb des Projektors angeordnet ist, wobei ein Luftströmungsweg von einem Raum zwischen einer Bilderzeugungsvorrichtungsmontierplatte und dem Hauptkörperkasten gebildet wird und wobei eine Strahlerplatte (53) der Bilderzeugungsvorrichtung (51) in dem derart gebildeten Luftströmungsweg angeordnet ist.

15. Projektor nach einem der Ansprüche 1 bis 14, wobei ein Lampengehäuse in einem Inneren des Projektors vorgesehen ist, wobei die Lichtquellenvorrichtung (61) in dem Lampengehäuse untergebracht ist, wobei Auslassluft von dem Kühlgebläse in das Lampengehäuse geblasen wird, während in dem Lampengehäuse verbleibende Luft direkt nach außerhalb des Projektors abgegeben wird.

16. Projektor nach einem der Ansprüche 1 bis 15, wobei ein Teil der Wandoberflächen des Lampengehäuses von einer aus einem wärmeisolierenden Material bestehenden Trennwand (121, 122) gebildet wird.

17. Projektor nach einem der Ansprüche 1 bis 17, wobei ein lichtquellenseitiges optisches System, so beispielsweise eine Lichtleitungsstange (75), ein Prisma oder ein Spiegel, durch ein gut wärmeleitendes Material fixiert ist.

18. Projektor nach einem der Ansprüche 1 bis 18, wobei eine Lüftung in einem Teil der Hauptleiterplatte vorgesehen ist, der nahe der Ansaugöffnung (111) des Kühlgebläses (110) angeordnet ist.

19. Verfahren zum Kühlen eines Projektors, der umfasst:
einen Hauptkörperkasten,
ein Kühlgebläse (110), das nahe der Mitte des Projektors angeordnet ist,
eine Steuerleiterplatte (103), die normal zu einer Ansaugluftströmungsrichtung nahe einer Luftansaugöffnung (111) des Kühlgebläses angeordnet ist, und
eine Lichtquellenvorrichtung (61), die nahe einer Luftabgabeöffnung (113) des Kühlgebläses (110) angeordnet ist, und
eine Mehrzahl von Wärmequellen (101, 51),
**dadurch gekennzeichnet, dass**
Luft aus einer Mehrzahl von Richtungen mit Ausnahme einer Richtung der Lichtquellenvorrichtung (61) innerhalb des Hauptkörperkastens des Projektors in der Umgebung des Kühlgebläses (110) entlang der Steuerleiterplatte (103) in die Luftansaugöffnung (111) gezogen wird, um hierdurch die Steuerleiterplatte und die Mehrzahl von Wärmequellen (101, 51), die nicht die Lichtquellenvorrichtung sind, in der Umgebung des Kühlgebläses zu kühlen, und
von der Luftabgabeöffnung (113) abgegebene Luft gegen die Lichtquellenvorrichtung (61) geblasen wird und die gegen die Lichtquellenvorrichtung (61) geblasene Luft sodann an ein Äußeres des Hauptkörperkastens des Projektors abgegeben wird.

## Revendications

1. Projecteur comprenant :
un boîtier de corps principal,
un ventilateur de refroidissement (110),
un circuit imprimé de commande (103),
un dispositif de source lumineuse (61) disposé à proximité d'un orifice d'évacuation d'air (113) du ventilateur de refroidissement (110), et
une pluralité de sources de chaleur (101, 51),
**caractérisé en ce que**,
le circuit imprimé de commande (103) est disposé à proximité d'un orifice d'aspiration (111) du ventilateur de refroidissement, perpendiculairement à une direction d'écoulement d'air d'aspiration,
le ventilateur de refroidissement (110) est disposé à proximité du centre du projecteur,
le projecteur est adapté pour aspirer de l'air provenant d'une pluralité de directions, à l'exception d'une direction du dispositif de source lumineuse (61), dans le boîtier de corps principal du projecteur qui entoure le ventilateur de refroidissement (110) le long du circuit imprimé de commande (103) dans l'orifice d'aspiration d'air (111) pour ainsi refroidir le circuit imprimé de commande et la pluralité de sources de chaleur (101, 51), autres que le dispositif de source lumineuse, qui entourent le ventilateur de refroidissement, et
pour souffler de l'air évacué par l'orifice d'évacuation d'air (113) sur le dispositif de source lumineuse (61) et pour évacuer l'air soufflé sur le dispositif de source lumineuse (61) vers l'extérieur du boîtier de corps principal du projecteur.

2. Projecteur selon la revendication 1, dans lequel l'ouverture (18) d'évacuation d'air est pourvue dans un côté d'un boîtier du projecteur.

3. Projecteur selon la revendication 1 ou 2, comprenant une ouverture pourvue dans un boîtier du projecteur pour y aspirer de l'air extérieur.

4. Projecteur selon la revendication 3, dans lequel l'ouverture pour aspirer de l'air extérieur est pourvue dans une pluralité de côtés (14, 15) du boîtier du projecteur.

5. Projecteur selon la revendication 3, dans lequel l'ouverture pour aspirer de l'air extérieur et l'ouverture pour évacuer l'air sont pourvues dans des côtés différents du boîtier de projecteur.

6. Projecteur selon l'une quelconque des revendications 1 à 5, dans lequel la source de chaleur autre que la source lumineuse comprend un dispositif de formation d'image (51) qui forme une image à projeter.

7. Projecteur selon l'une quelconque des revendications 1 à 6, dans lequel la source de chaleur autre que la source lumineuse comprend un dispositif d'alimentation (101) pour la source lumineuse.

8. Projecteur selon l'une quelconque des revendications 1 à 7, dans lequel la source de chaleur autre que la source lumineuse comprend un circuit imprimé de commande (103) du projecteur.

9. Projecteur selon l'une quelconque des revendications 1 à 8, dans lequel le ventilateur de refroidissement (110) est disposé sensiblement au centre d'un boîtier du projecteur.

10. Projecteur selon l'une quelconque des revendications 1 à 9, comprenant en outre une cloison (121) qui sépare spatialement la source lumineuse de la source de chaleur autre que la source lumineuse.

11. Projecteur selon l'une quelconque des revendications 1 à 10, comprenant en outre une lentille de projection et une cloison (124) qui sépare spatialement la source lumineuse de la lentille de projection.

12. Projecteur selon l'une quelconque des revendications 1 à 11, dans lequel un orifice d'aspiration (111) et l'orifice d'évacuation (113) du ventilateur de refroidissement (110) sont pourvus de manière à s'intersecter à angle droit.

13. Projecteur selon l'une quelconque des revendications 1 à 12, dans lequel un circuit imprimé principal (103) qui incorpore un circuit de commande du projecteur est constitué d'une pluralité de circuits imprimés, la pluralité de circuits imprimés étant empilés avec un intervalle et disposés à proximité d'un orifice d'aspiration (111) du ventilateur de refroidissement (110).

14. Projecteur selon l'une quelconque des revendications 1 à 13, dans lequel un dispositif de formation d'image (51) est disposé à proximité d'un boîtier de corps principal à l'intérieur du projecteur, dans lequel un chemin d'écoulement d'air est formé par un espace entre une plaque de montage du dispositif de formation d'image et le boîtier de corps principal, et dans lequel une plaque de radiateur (53) du dispositif de formation d'image (51) est disposée dans le chemin d'écoulement d'air ainsi formé.

15. Projecteur selon l'une quelconque des revendications 1 à 14, dans lequel un boîtier de lampe est pourvu à l'intérieur du projecteur, dans lequel le dispositif de source lumineuse (61) est agencé dans le boîtier de lampe, dans lequel l'air évacué par le ventilateur de refroidissement est soufflé dans le boîtier de lampe, alors que l'air présent dans le boîtier de lampe est évacué directement à l'extérieur du projecteur.

16. Projecteur selon l'une quelconque des revendications 1 à 15, dans lequel une partie des surfaces de paroi du boîtier de lampe est formée par une cloison (121, 122) constituée d'un matériau isolant thermique.

17. Projecteur selon l'une quelconque des revendications 1 à 17, dans lequel un système optique du côté de la source lumineuse, tel qu'une barre de guidage de lumière (75), un prisme ou un miroir, est fixé par un matériau qui conduit bien la chaleur.

18. Projecteur selon l'une quelconque des revendications 1 à 18, dans lequel une ouverture est pourvue dans une partie du circuit imprimé principal qui est disposée à proximité de l'orifice d'aspiration (111) du ventilateur de refroidissement (110).

19. Procédé de refroidissement d'un projecteur, comprenant :
un boîtier de corps principal,
un ventilateur de refroidissement (110) disposé à proximité du centre du projecteur,
un circuit imprimé de commande (103) disposé perpendiculairement à une direction d'écoulement d'air d'aspiration à proximité d'un orifice d'aspiration d'air (111) du ventilateur de refroidissement, et
un dispositif de source lumineuse (61) disposé à proximité d'un orifice d'évacuation d'air (113) du ventilateur de refroidissement (110), et
une pluralité de sources de chaleur (101, 51),
**caractérisé en ce que**,
de l'air provenant d'une pluralité de directions, à l'exception d'une direction du dispositif de source lumineuse (61), dans le boîtier de corps principal du projecteur qui entoure le ventilateur de refroidissement (110) est aspiré le long du circuit imprimé de commande (103) dans l'orifice d'aspiration d'air (111) pour ainsi refroidir le circuit imprimé de commande et la pluralité de sources de chaleur (101, 51), autres que le dispositif de source lumineuse, qui entourent le ventilateur de refroidissement, et
de l'air évacué par l'orifice d'évacuation d'air (113) est soufflé sur le dispositif de source lumineuse (61) et l'air soufflé sur le dispositif de source lumineuse (61) est ensuite évacué vers l'extérieur du boîtier de corps principal du projecteur.
